# EUROPEAN PATENT APPLICATION

(11) **EP 2 418 878 A1**
(43) Date of publication of application: **15.02.2012**
(21) Application number: 10771995.7
(22) Date of filing: 22.04.2010
(51) Int. Cl.: H04W 4/22, H04W 76/02

(54) **EMERGENCY CALL-BASED SECURITY ALGORITHM NEGOTIATION METHOD AND APPARATUS**

(30) Priority: 04.05.2009 CN 200910083358
(71) Applicant: ZTE Corporation, Shenzhen, Guangdong 518057 (CN)
(72) Inventor: XU, Jianhua, Shenzhen Guangdong 518057 (CN); GAN, Lu, Shenzhen Guangdong 518057 (CN); ZHANG, Xuwu, Shenzhen Guangdong 518057 (CN)
(74) Representative: Kling, Simone
(86) International application number: PCT/CN2010/072081
(87) International publication number: WO 2010/127592

(57) **Abstract**

An emergency call-based security algorithm negotiation method and apparatus are disclosed. The method comprises the following steps: after receiving an attachment request from a User Equipment (UE) and determining that the attachment request is an emergency attachment request, a network side sets UE security capabilities to support a null algorithm only; or, the network side determines that the UE security capabilities included in the attachment request support the null algorithm only; performing Non-Access Stratum (NAS) and Access Stratum (AS) selection processing taking the null algorithm as a security algorithm for the user equipment. A mobility management entity (MME) and an evolved Node-B (eNB) can perform security negotiation directly on the basis that the user equipment only supports the null algorithm when the NAS and NA security negotiation is performed, so that the access efficiency and the call completing rate of emergency calls are improved.

## Description

### TECHNICAL FIELD

The present invention relates to an emergency call technology in a mobile network, particularly to an emergency call-based security algorithm negotiation method and apparatus in a mobile network.

### BACKGROUND

A Non-Access Stratum (NAS) integrity protection key K_{NASint} is generated through an algorithm. A Mobile Management Entity (MME) notifies a User Equipment (UE) of a non-access stratum encryption key K_{NASenc} and the K_{NASint}, and the UE performs security analysis to received Non-Access Stratum (NAS) messages through the keys notified by the MME.

An Access Stratum (AS) root key used by an evolved Node-B (eNB) is an evolved Node-B key (Key eNB) K_{eNB}. The MME generates the K_{eNB} through a K_{ASME} and a Non-Access Stratum (NAS) uplink counter, and notifies the eNB of the K_{eNB}. The eNB generates an RRC encryption key K_{RRCenc} through the K_{eNB} and a Radio Resource Control (RRC) encryption algorithm selected for the UE, generates an RRC integrity protection key K_{RRCint} through the K_{eNB} and an RRC integrity protection algorithm selected for the UE, and generates a UP encryption key K_{UPenc} through the K_{eNB} and a selected UP encryption algorithm.

The above NAS and AS security negotiation processing is designed for normal calls, while for an emergency call, security negotiation processing is also performed through the above security negotiation method in principle; however, since an emergency call is a kind of special call communication, even though the user equipment is in a limited service state, the emergency call is also supported; for instance, in case of no normal communication signals, the user equipment also supports the call of 112; and under the condition of no Subscriber Identity Module (SIM) card, the user equipment also supports the emergency calls such as 110, 119 and the like. Under the circumstance of an emergency call, if security certification between the UE and a communication network is performed as normal calls, the call completing rate of the emergency call may be influenced. At present, there is no technical scheme for processing security negotiation in case of an emergency call.

### SUMMARY

In view of this, the main purpose of the present invention is to provide an emergency call-based security algorithm negotiation method and apparatus, which can improve access efficiency and call completing rate of emergency calls.

In order to achieve the purpose above, the technical scheme of the present invention is realized as follows.

An emergency call-based security algorithm negotiation method comprises:
after receiving an emergency attachment request from a User Equipment (UE) and permitting the emergency attachment request, a network side sets UE security capabilities to support a null algorithm only; or, the network side determines that the UE security capabilities included in the attachment request support the null algorithm only;
performing Non-Access Stratum (NAS) and Access Stratum (AS) selection processing taking the null algorithm as a security algorithm for the user equipment.

Preferably, the step of performing NAS and AS selection processing taking the null algorithm as a security algorithm for the user equipment may specifically comprise:
a Mobile Management Entity (MME) of the network side sends an NAS security mode command to the user equipment, and the NAS security mode command includes indication information taking the null algorithm as an NAS security algorithm.

Preferably, the step of performing NAS and AS selection processing taking the null algorithm as a security algorithm for the user equipment may specifically comprise:
a Mobile Management Entity (MME) of the network side notifies an evolved Node-B (eNB) of security capability information of the user equipment;
the eNB determines that the user equipment supports the null algorithm only according to the security capability information of the user equipment, and sends an AS security mode command to the user equipment, and the AS security mode command includes indication information taking the null algorithm as an AS security algorithm.

Preferably, the step of determining an AS root key K_{eNB} used by the eNB may specifically comprise:
when determining that UE attachment is emergency attachment, the MME randomly generates the AS root key K_{eNB} used by the eNB and notifies the eNB.

Preferably, the step that the attachment request includes the security capability information of the user equipment may specifically comprise:
when determining that a current call request is an emergency call request, the user equipment identifies the security capability information of the user equipment in the attachment request as supporting the null algorithm only.

Preferably, the method may further comprise:
when initiating handover based on X2 interface, a source eNB notifies a target eNB of the current security capability information of the user equipment stored in the source eNB, namely supporting the null algorithm only; and
the target eNB bears identification information taking the null algorithm as an AS security algorithm in a handover response message.

Preferably, the method may further comprise:
when initiating handover based on S1 interface, an MME notifies a target eNB of the current security capability information of the user equipment stored in the MME, namely supporting the null algorithm only; and
the target eNB bears identification information taking the null algorithm as an AS security algorithm in a handover response message.

An emergency call-based security algorithm negotiation apparatus comprises:
a first determining unit is used for determining whether a current call request is an emergency call request, and triggering the generating unit if permitting the emergency call request;
a generating unit is used for generating an attachment request for the emergency call and identifying security capability information of a user equipment initiating the call in the attachment request as supporting a null algorithm only;
a sending unit is used for sending the attachment request;
a receiving unit is used for receiving the attachment request sent by the sending unit;
a second determining unit is used for determining whether the security capability information of the user equipment included in the attachment request supports the null algorithm only, and triggering the security negotiation processing unit if so; and
a security negotiation processing unit is used for performing NAS and AS selection processing taking the null algorithm as a security algorithm for the user equipment.

Preferably, the security negotiation processing unit may comprise a first sending module used for sending an NAS security mode command to the user equipment when the second determining unit determines that the user equipment supports the null algorithm only, and the NAS security mode command may include indication information taking the null algorithm as an NAS security algorithm.

Preferably, the security negotiation processing unit may further comprise:
a determining module is used for determining an Access Stratum (AS) root key K_{eNB} used by an evolved Node-B (eNB);
a notifying module is used for notifying the eNB of the root key K_{eNB} determined by the determining module together with the security capability information of the user equipment; and
a second sending module is used for sending an AS security mode command to the user equipment when the eNB determines that the user equipment only supports the null algorithm, and the AS security mode command includes indication information taking the null algorithm as an AS security algorithm.

An emergency call-based security algorithm negotiation apparatus comprises:
a receiving unit is used for receiving an attachment request from a user equipment;
a determining unit is used for determining whether the attachment request is an emergency attachment request, and triggering the setting unit if so;
a setting unit is used for setting UE security capabilities to support a null algorithm only; and
a security negotiation processing unit is used for performing NAS and AS security negotiation processing with the user equipment using the null algorithm.

Preferably, the security negotiation processing unit may comprise a first sending module used for sending an NAS security mode command to the user equipment when the setting unit sets the user equipment to support the null algorithm only, and the NAS security mode command may include indication information taking the null algorithm as an NAS security algorithm.

Preferably, the security negotiation processing unit may further comprise:
a determining module is used for determining an AS root key K_{eNB} used by an evolved Node-B (eNB);
a notifying module is used for notifying the eNB of the root key K_{eNB} determined by the determining module together with security capability information of the user equipment; and
a second sending module is used for sending an AS security mode command to the user equipment when the eNB determines that the user equipment only supports the null algorithm, and the AS security mode command includes indication information taking the null algorithm as an AS security algorithm.

The user equipment of the present invention identifies the security capability information of the user equipment in the attachment request as supporting a null algorithm only when determining that a current call of a user is an emergency call; or, after receiving the attachment request of the emergency call from the user equipment, the network side (namely the MME) determines that the current attachment request is an emergency attachment request and sets the UE security capabilities to support the null algorithm only; in this way, when the MME and the eNB perform NAS and AS security negotiation, all that is needed is to perform security negotiation directly on the basis that the user equipment supports a null algorithm only, so that the access efficiency and the call completing rate of emergency calls are improved. The present invention is simple in implementation and is practical.

### BRIEF DESCRIPTION OF THE DRAWINGS

Fig. 1 shows a flow diagram of embodiment 1 of an emergency call-based security algorithm negotiation method of the present invention;
Fig. 2 shows a flow diagram of embodiment 2 of an emergency call-based security algorithm negotiation method of the present invention;
Fig. 3 shows a flow diagram of embodiment 3 of an emergency call-based security algorithm negotiation method of the present invention;
Fig. 4 shows a flow diagram of embodiment 4 of an emergency call-based security algorithm negotiation method of the present invention;
Fig. 5 shows a structural diagram of embodiment 1 of an emergency call-based security algorithm negotiation apparatus of the present invention; and
Fig. 6 shows a structural diagram of embodiment 2 of an emergency call-based security algorithm negotiation apparatus of the present invention.

### DETAILED DESCRIPTION

The basic idea of the present invention lies in that: when determining that a current call of a user is an emergency call, a user equipment identifies security capability information of the user equipment in an attachment request as supporting a null algorithm only; or, after receiving the attachment request of the emergency call from the user equipment, a network side (namely an MME) determines that the current attachment request is an emergency attachment request and sets UE security capabilities to support the null algorithm only; in this way, when the MME and an eNB perform NAS and AS security negotiation, all that is needed is to perform security negotiation directly on the basis that the user equipment supports a null algorithm only, so that the access efficiency and the call completing rate of emergency calls are improved. The present invention is simple in implementation and is practical.

In order to make the purposes, technical scheme and advantages of the present invention clearer, the present invention will be further illustrated in detail through given embodiments with reference to drawings.

### Embodiment 1

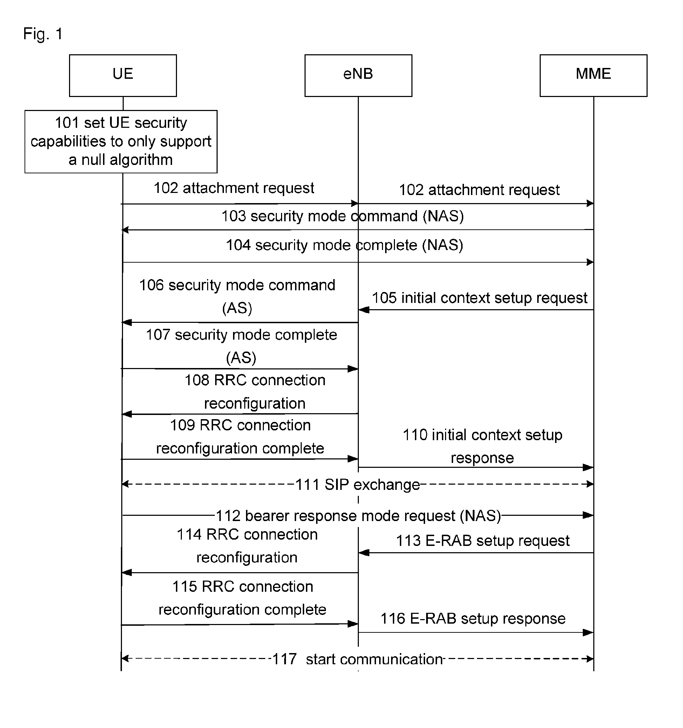

Fig. 1 shows a flow diagram of embodiment 1 of an emergency call-based security algorithm negotiation method of the present invention; as shown in Fig. 1, the emergency call-based security algorithm negotiation method of the embodiment comprises the following steps.

Step 101: when determining that a current call request initiated by a user is an emergency call request, a User Equipment (UE) sets UE security capabilities to support a null algorithm only.

In step 101 of the present invention, once the UE determines that the call request of the user is an emergency call, the security capabilities are set to support the null algorithm only whether the UE is in limited service state or not.

Step 102: the UE sends an attachment request (Attach Req) message to a network side; the item of Evolved Packet System attachment type (EPS Attach Type) in the attachment request message is set to be Evolved Packet System emergency attachment (EPS Emergency Attach), wherein the item of UE network capability comprises the UE security capabilities (supporting the null algorithm only). The network side refers to an eNB, an MME and other network elements.

Step 103: the MME selects the null algorithm according to the UE security capabilities and sends an NAS security mode command to the UE, wherein the security mode command includes indication information taking the null algorithm as an NAS security algorithm. The MME determines that the UE security capabilities support null algorithm only, then encryption and integrity protection processing is no longer performed to NAS messages between the MME and the UE, and the NAS security mode command is used for notifying the UE that the NAS security algorithm is the null algorithm.

Step 104: after receiving the security mode command message, the UE responds to the MME with a security mode complete message and confirms to the MME that security mode configuration goes into effect.

Step 105: the MME generates an initial context setup request message and sends the message to the eNB, wherein the item of UE security capabilities (UESecurityCapabilities) in the message is set to support the null algorithm only according to the information of UE network capability in the attachment request in step 102, and fills an Evolved Radio Access Bearer to be setup list (E-RAB to be setup list) according to a Quality of Service (QoS) requirement used for sending Session Initiation Protocol (SIP) signalling. The initial context setup request message may further include an AS root key K_{eNB} that is randomly generated for the eNB by the MME and used by the eNB.

Step 106: the eNB determines that the UE only supports the null algorithm according to UESecurityCapabilities and initiates an AS security mode command to the UE, wherein the AS security mode command includes indication information taking the null algorithm as an AS security algorithm. When the eNB determines that the UE security capabilities support the null algorithm only, then encryption and integrity protection processing is no longer performed to AS messages between the eNB and the UE, and the AS security mode command is used for notifying the UE that the security algorithm used by the AS messages is the null algorithm.

Step 107: the UE responds to the eNB with an AS security mode complete message.

Step 108: the eNB is configured with a corresponding empty bearer according to the E-RAB to be setup list and sends an RRC connection reconfiguration (RRCConnectionReconfiguration) message to the UE.

Step 109: the UE establishes empty bearer resources according to the RRCConnectionReconfiguration message and then responds to the eNB with an RCC connection reconfiguration complete (RCCConnectionReconfigurationComplete) message.

Step 110: the eNB responds to the MME with an initial context setup response message.

Step 111: the UE initiates an SIP registration process to an IP Multimedia Subsystem (SIM) server through a default bearer, and initiates an emergency call signaling process to the IMS server if the SIP registration process is successful, and after the process ends, the UE and a target exchange the media face transport layer addresses with each other and negotiate encoding and decoding formats and other parameters used by them.

Step 112: the UE converts the negotiated encoding and decoding formats and other parameters into the QoS requirement and initiates a bearer resource modification request message to the MME so as to request to establish a dedicated bearer used for sending media streams.

Step 113: the MME generates an Evolved Radio Access Bearer setup request (E-BAR setup request) message according to the QoS parameters in the bearer resource modification request message and sends the E-RAB setup request message to the eNB.

Step 114: the eNB sends the RRCConnectionReconfiguration message, including resource configuration of the dedicated bearer, to the UE.

Step 115: after the UE responds to the eNB with the RRCConnectionReconfigurationComplete message, the dedicated bearer is set up successfully.

Step 116: the eNB responds to the MME with the E-RAB setup response message.

Step 117: after the dedicated bearer used for sending media streams is set up successfully, the UE begins to communicate with the target.

### Embodiment 2

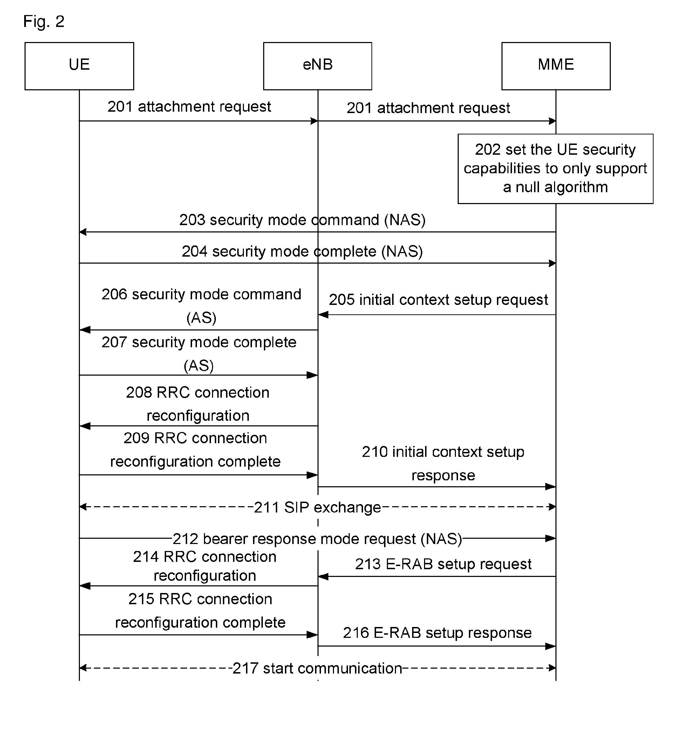

Fig. 2 shows a flow diagram of embodiment 2 of an emergency call-based security algorithm negotiation method of the present invention; as shown in Fig. 2, the embodiment of the emergency call-based security algorithm negotiation method comprises the following steps.

Step 201: a UE sends an attachment request (Attach Req) message to a network side; the item of Evolved Packet System attachment type (EPS Attach Type) in the Attach Req message is set to be Evolved Packet System emergency attachment (EPS Emergency Attach), wherein the item of UE network capability is filled with real UE security capabilities, namely, the UE security capabilities under a normal condition as well as a limited condition.

Step 202: the MME ignores the security capabilities sent by the UE and directly sets the UE security capabilities to support a null algorithm only.

Step 203: the MME selects the null algorithm according to the UE security capabilities and initiates an NAS security mode command to the UE, wherein the security mode command includes indication information taking the null algorithm as an NAS security algorithm.

Step 204: the UE responds to the MME with a security mode complete message and does not check the UE security capabilities fed back by the MME under the condition of emergency attachment.

Step 205: the MME generates an initial context setup request message and sends the message to the eNB; the item of UE security capabilities (UESecurityCapabilities) in the message is set to support the null algorithm only; and an E-RAB to be setup list is filled according to a QoS requirement used for sending SIP signalling, wherein the initial context setup request message also includes an AS root key K_{eNB} that is randomly generated for the eNB by the MME and used by the eNB.

Steps 206 to 217 in the implementation method are exactly the same with the above steps 106 to 117, so it is unnecessary to give more details here.

### Embodiment 3

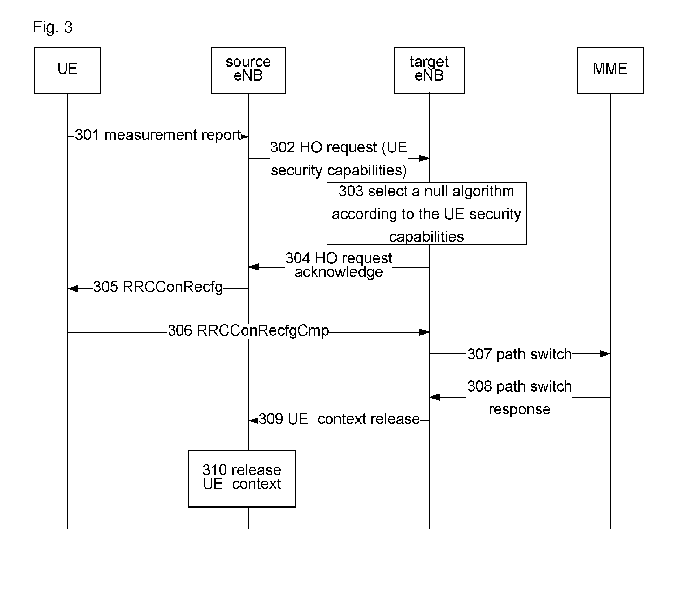

Fig. 3 shows a flow diagram of embodiment 3 of an emergency call-based security algorithm negotiation method of the present invention; as shown in Fig. 3, the embodiment of the emergency call-based security algorithm negotiation method comprises the following steps.

Step 301: a UE sends a measurement report in which a desired target cell ID is included.

Step 302: a source eNB initiates handover based on X2 interface according to the target cell ID and sends a handover request to a target eNB, wherein the request includes UE security capabilities (supporting a null algorithm only).

Step 303: the target eNB selects the null algorithm as an AS security algorithm according to the UE security capabilities sent from the source side.

Step 304: the target eNB generates an RRCConnectionReconfiguration message according to the selected security algorithm and service parameters, wherein the RRCConnectionReconfiguration message includes elements related to the handover which are encapsulated in a handover request acknowledge message to be sent to the source eNB; and the RRCConnectionReconfiguration message also includes indication information taking the null algorithm as a security algorithm used by AS messages.

Step 305: the source eNB extracts RRC message content from the handover request acknowledge message and sends the content to the UE.

Step 306: the UE performs connection with the target cell and sends an RRCConnectionReconfigurationComplete message to the target eNB.

Step 307: the target eNB sends a path switch request message to the MME.

Step 308: the MME responds to the eNB with a path switch request acknowledge message.

Step 309: the target eNB sends a UE context release message to the source eNB.

Step 310: the source eNB releases the UE context.

### Embodiment 4

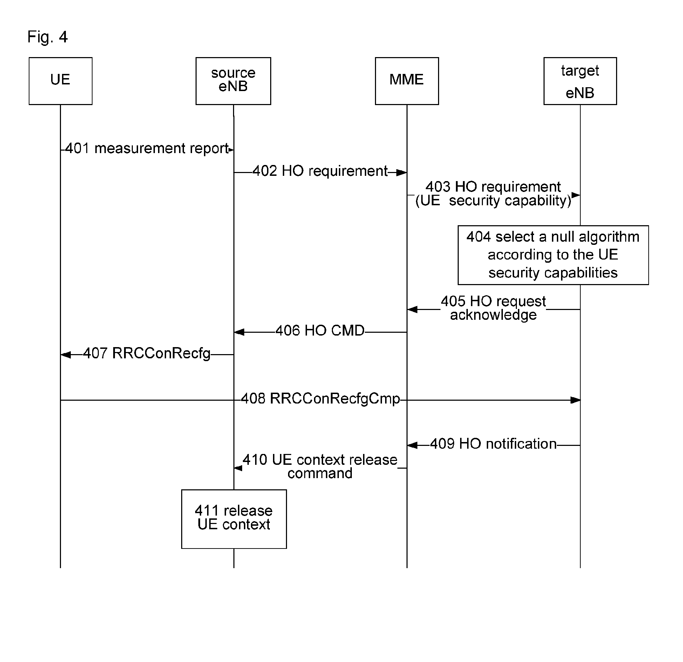

Fig. 4 shows a flow diagram of embodiment 4 of an emergency call-based security algorithm negotiation method of the present invention; as shown in Fig. 4, the embodiment of the emergency call-based security algorithm negotiation method comprises the following steps.

Step 401: a UE sends a measurement report in which a required target cell ID is included.

Step 402: a source eNB initiates handover based on S1 interface according to the target cell ID and sends a handover request to a target eNB.

Step 403: the MME contains UE security capabilities supporting a null algorithm only and sends a handover request to a target eNB, wherein the request includes UE security capabilities (supporting the null algorithm only).

Step 404: the target eNB selects the null algorithm as an AS security algorithm according to the UE security capabilities sent from the MME.

Step 405: the target eNB generates an RRCConnectionReconfiguration message according to the selected security algorithm and service parameters, the RRCConnectionReconfiguration message includes elements related to the handover which are encapsulated in a handover request acknowledge message to be sent to the MME; and the RRCConnectionReconfiguration message also includes indication information taking the null algorithm as a security algorithm as used by AS messages.

Step 406: the MME generates a handover command which includes an RRC message sent from the target eNB and sends the message to the source eNB.

Step 407: the source eNB extracts RRC message content from the handover command and sends the content to the UE.

Step 408: the UE performs connection with the target cell and sends an RRCConnectionReconfigurationComplete message to the target eNB.

Step 409: the target eNB sends a handover notification (HANDOVER NOTIFY) to the MME.

Step 410: the MME sends a UE context release command to the source eNB to notify it to release the UE context.

Step 411: the source eNB initiates the UE context release.

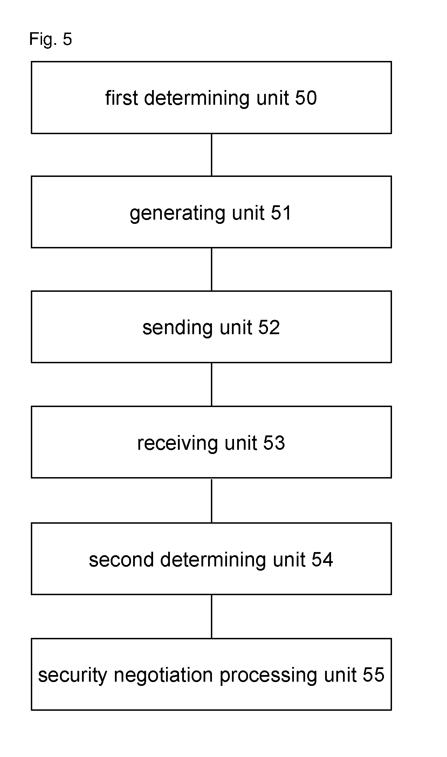

Fig. 5 shows a structural diagram of embodiment 1 of an emergency call-based security algorithm negotiation apparatus of the present invention; as shown in Fig. 5, the embodiment of the emergency call-based security algorithm negotiation apparatus comprises a first determining unit 50, a generating unit 51, a sending unit 52, a receiving unit 53, a second determining unit 54 and a security negotiation processing unit 55; wherein the first determining unit 50 is used for determining whether a current call request is an emergency call request, and triggering the generating unit 51 if so; the generating unit 51 is used for generating an attachment request for the emergency call and identifying security capability information of a user equipment initiating the call in the attachment request as supporting a null algorithm only; the sending unit 52 is used for sending the attachment request; the receiving unit 53 is used for receiving the attachment request sent by the sending unit 52; the second determining unit 54 is used for determining whether the security capability information of the user equipment included in the attachment request supports the null algorithm only, and triggering the security negotiation processing unit 55 if so; and the security negotiation processing unit 55 is used for performing NAS and AS security negotiation processing with the user equipment using the null algorithm. Wherein the security negotiation processing unit 55 comprises a first sending module used for sending an NAS security mode command to the user equipment after the second determining unit 54 determines that the user terminal supports the null algorithm only, and the NAS security mode command includes indication information taking the null algorithm as an NAS security algorithm. The security negotiation processing unit 55 may further comprise a determining module, a notifying module and a second sending module, wherein the determining module is used for determining an AS root key K_{eNB} used by an evolved Node-B (eNB); the notifying module is used for notifying the eNB of the AS root key K_{eNB} determined by the determining module and used by the eNB together with the security capability information of the user equipment; and the second sending module is used for sending an AS security mode command to the user equipment when the eNB determines that the user equipment only supports the null algorithm, wherein the AS security mode command includes indication information taking the null algorithm as an AS security algorithm.

The technical personnel in the field should know that the emergency call-based security algorithm negotiation apparatus shown in Fig. 5 of the present invention is designed to realize the emergency call-based security algorithm negotiation method shown in Fig. 1; the practical functions of each processing unit of the apparatus shown in Fig. 5 can be understood with reference to the related depiction of the method shown in Fig. 1; and the function of each unit can be realized through programs running on a processor as well as corresponding logic circuits.

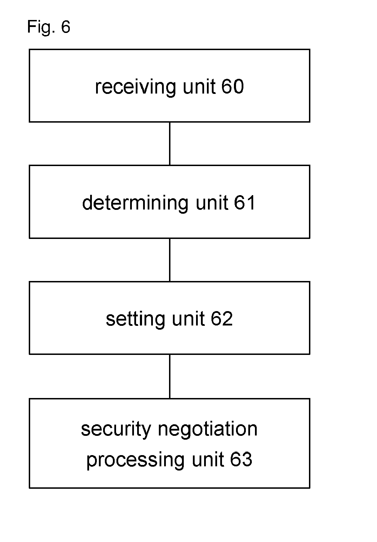

Fig. 6 shows a structural diagram of embodiment 2 of an emergency call-based security algorithm negotiation apparatus of the present invention; as shown in Fig. 6, the embodiment of the emergency call-based security algorithm negotiation apparatus comprises a receiving unit 60, a determining unit 61, a setting unit 62 and a security negotiation processing unit 63; wherein the receiving unit 60 is used for receiving an attachment request from a user equipment; the determining unit 61 is used for determining whether the attachment request is an emergency attachment request, and triggering the setting unit 62 if so; the setting unit 62 is used for setting UE security capabilities to support a null algorithm only; and the security negotiation processing unit 63 is used for performing NAS and AS security negotiation processing with the user equipment using the null algorithm.

The security negotiation processing unit 63 comprises a first sending module used for sending an NAS security mode command to the user equipment when the setting unit 62 sets the user equipment to support the null algorithm only, wherein the NAS security mode command includes indication information taking the null algorithm as an NAS security algorithm. The security negotiation processing unit 63 may further comprise a determining module, a notifying module and a second sending module, wherein the determining module is used for determining an AS root key K_{eNB} used by an evolved Node-B (eNB); the notifying module is used for notifying the eNB of the AS root key K_{eNB} determined by the determining module and used by the eNB together with security capability information of the user equipment; and the second sending module is used for sending an AS security mode command to the user equipment when the eNB determines that the user equipment only supports the null algorithm, wherein the AS security mode command includes indication information taking the null algorithm as an AS security algorithm.

The technical personnel in the field should know that the emergency call-based security algorithm negotiation apparatus shown in Fig. 6 of the present invention is designed to realize the emergency call-based security algorithm negotiation method shown in Fig. 2; the practical function of each processing unit of the apparatus shown in Fig. 6 can be understood with reference to the related depiction of the method shown in Fig. 2; and the function of each unit can be realized through programs running on a processor as well as corresponding logic circuits.

All the above only describes preferred embodiments of the present invention rather than restrict the scope of protection of the present invention.

## Claims

1. An emergency call-based security algorithm negotiation method, comprising:
after receiving an emergency attachment request from a User Equipment (UE) and permitting the emergency attachment request, a network side setting UE security capabilities to support a null algorithm only; or, the network side determining that the UE security capabilities included in the attachment request support the null algorithm only;
performing Non-Access Stratum (NAS) and Access Stratum (AS) selection processing taking the null algorithm as a security algorithm for the user equipment.

2. The method according to claim 1, wherein the step of performing NAS and AS selection processing taking the null algorithm as a security algorithm for the user equipment specifically comprises:
a Mobile Management Entity (MME) of the network side sends an NAS security mode command to the user equipment, and the NAS security mode command includes indication information taking the null algorithm as an NAS security algorithm.

3. The method according to claim 1, wherein the step of performing NAS and AS selection processing taking the null algorithm as a security algorithm for the user equipment specifically comprises:
a Mobile Management Entity (MME) of the network side notifies an evolved Node-B (eNB) of security capability information of the user equipment;
the eNB determines that the user equipment supports the null algorithm only according to the security capability information of the user equipment, and sends an AS security mode command to the user equipment, and the AS security mode command includes indication information taking the null algorithm as an AS security algorithm.

4. The method according to claim 3, wherein the step of determining an AS root key K_{eNB} used by the eNB specifically comprises:
when determining that UE attachment is emergency attachment, the MME randomly generates the AS root key K_{eNB} used by the eNB and notifies the eNB.

5. The method according to claim 1, wherein the step that the attachment request includes the security capability information of the user equipment specifically comprises:
when determining that a current call request is an emergency call request, the user equipment identifies the security capability information of the user equipment in the attachment request as supporting the null algorithm only.

6. The method according to claim 1, further comprising:
when initiating handover based on X2 interface, a source eNB notifying a target eNB of the current security capability information of the user equipment stored in the source eNB, namely supporting the null algorithm only; and
the target eNB bearing identification information taking the null algorithm as an AS security algorithm in a handover response message.

7. The method according to claim 1, further comprising:
when initiating handover based on S1 interface, an MME notifying a target eNB of the current security capability information of the user equipment stored in the MME, namely supporting the null algorithm only; and
the target eNB bearing identification information taking the null algorithm as an AS security algorithm in a handover response message.

8. An emergency call-based security algorithm negotiation apparatus, comprising a first determining unit, a generating unit, a sending unit, a receiving unit, a second determining unit and a security negotiation processing unit; wherein
the first determining unit is used for determining whether a current call request is an emergency call request, and triggering the generating unit if permitting the emergency call request;
the generating unit is used for generating an attachment request for the emergency call and identifying security capability information of a user equipment initiating the call in the attachment request as supporting a null algorithm only;
the sending unit is used for sending the attachment request;
the receiving unit is used for receiving the attachment request sent by the sending unit;
the second determining unit is used for determining whether the security capability information of the user equipment included in the attachment request supports the null algorithm only, and triggering the security negotiation processing unit if so; and
the security negotiation processing unit is used for performing NAS and AS selection processing taking the null algorithm as a security algorithm for the user equipment.

9. The apparatus according to claim 8, wherein the security negotiation processing unit comprises a first sending module used for sending an NAS security mode command to the user equipment when the second determining unit determines that the user equipment supports the null algorithm only, and the NAS security mode command includes indication information taking the null algorithm as an NAS security algorithm.

10. The apparatus according to claim 9, wherein the security negotiation processing unit further comprises a determining module, a notifying model and a second sending module; wherein
the determining module is used for determining an Access Stratum (AS) root key K_{eNB} used by an evolved Node-B (eNB);
the notifying module is used for notifying the eNB of the root key K_{eNB} determined by the determining module together with the security capability information of the user equipment; and
the second sending module is used for sending an AS security mode command to the user equipment when the eNB determines that the user equipment only supports the null algorithm, and the AS security mode command includes indication information taking the null algorithm as an AS security algorithm.

11. An emergency call-based security algorithm negotiation apparatus, comprising a receiving unit, a determining unit, a setting unit and a security negotiation processing unit; wherein
the receiving unit is used for receiving an attachment request from a user equipment;
the determining unit is used for determining whether the attachment request is an emergency attachment request, and triggering the setting unit if so;
the setting unit is used for setting UE security capabilities to support a null algorithm only; and
the security negotiation processing unit is used for performing NAS and AS security negotiation processing with the user equipment using the null algorithm.

12. The apparatus according to claim 11, wherein the security negotiation processing unit comprises a first sending module used for sending an NAS security mode command to the user equipment when the setting unit sets the user equipment to support the null algorithm only, and the NAS security mode command includes indication information taking the null algorithm as an NAS security algorithm.

13. The apparatus according to claim 12, wherein the security negotiation processing unit further comprises a determining module, a notifying module and a second sending module; wherein
the determining module is used for determining an AS root key K_{eNB} used by an evolved Node-B (eNB);
the notifying module is used for notifying the eNB of the root key K_{eNB} determined by the determining module together with security capability information of the user equipment; and
the second sending module is used for sending an AS security mode command to the user equipment when the eNB determines that the user equipment only supports the null algorithm, and the AS security mode command includes indication information taking the null algorithm as an AS security algorithm.
